# EUROPÄISCHE PATENTSCHRIFT

(11) **EP 2 941 686 B1**
(45) Veröffentlichungstag und Bekanntmachung des Hinweises auf die Patenterteilung: **28.03.2018**
(21) Anmeldenummer: 13815449.7
(22) Anmeldetag: 16.12.2013
(51) Int. Cl.: G06F 3/041, G06F 3/0488

(54) **VERFAHREN ZUM BETREIBEN EINER BEDIENVORRICHTUNG IN EINEM FAHRZEUG**
METHOD FOR OPERATING A CONTROL DEVICE IN A VEHICLE
PROCÉDÉ POUR FAIRE FONCTIONNER UN DISPOSITIF DE COMMANDE INSTALLÉ DANS UN VÉHICULE

(30) Priorität: 04.01.2013 DE 102013000221; 27.04.2013 DE 102013007329
(43) Veröffentlichungstag der Anmeldung: 11.11.2015
(73) Patentinhaber: Volkswagen Aktiengesellschaft, 38440 Wolfsburg (DE)
(72) Erfinder: WENGELNIK, Heino, 38442 Wolfsburg (DE); WILD, Holger, 10179 Berlin (DE)
(86) Internationale Anmeldenummer: PCT/EP2013/076692
(87) Internationale Veröffentlichungsnummer: WO 2014/106571

(56) Entgegenhaltungen:
- DE-A1-102005 048 840
- DE-A1-102008 046 764
- DE-A1-102009 036 369
- US-A1- 2010 090 964

## Beschreibung

Die vorliegende Erfindung betrifft ein Verfahren zum Betreiben einer Bedienvorrichtung in einem Fahrzeug, wobei die Bedienvorrichtung ein Bedienelement mit einer Bedienoberfläche umfasst. Ferner betrifft die Erfindung eine Bedienvorrichtung in einem Fahrzeug.

In einem Fahrzeug, insbesondere in einem Kraftfahrzeug, ist eine Vielzahl von elektronischen Einrichtungen vorgesehen, deren Bedienung dem Fahrer oder einem anderen Fahrzeuginsassen ermöglicht werden muss. Zu diesen Einrichtungen gehören beispielsweise ein Navigationssystem, eine Vielzahl von Fahrerassistenzsystemen sowie Kommunikations- und Multimediaanwendungen, die z. B. eine Telefonanlage und Einrichtungen zur Wiedergabe von Musik und Sprache, wie ein Radio oder einen CD- Spieler, umfassen.

Um die vielfältigen Einrichtungen im Fahrzeug bedienen zu können, werden in Fahrzeugen vielfach zentrale Multifunktionsbediensysteme eingesetzt, welche eine oder mehrere Multifunktionsanzeige(n) und Bedienelemente umfassen, mit denen die im Fahrzeug enthaltenen Einrichtungen bedient werden können. Die Bedienung wird dabei durch die auf der Multifunktionsanzeige wiedergegebenen Informationen unterstützt bzw. geführt. Ferner kann über das Bediensystem ausgewählt werden, welche Informationen auf der Multifunktionsanzeige angezeigt werden sollen.

Die US 8,013,837 B1 beschreibt ein Verfahren, bei dem durch eine Zeige-Klick-Geste eine Texteingabe oder eine Eingabe von Steuerzeichen die Steuerung von Bedieneinrichtungen vereinfacht wird.

In der DE 103 26 215 A1 ist eine Bedienvorrichtung beschrieben, bei der die Annäherung beispielsweise eines Fingers an ein Taste ausreicht, um eine Vorschau auf die Funktion der Taste anzuzeigen. Durch Drücken der Taste wird dann die Funktion aktiviert.

Für die Bedienung der vielfältigen Einrichtungen eines Fahrzeugs ergeben sich sehr spezielle Anforderungen, da die Bedienung unter anderem durch den Fahrer erfolgen kann. Es ist sehr wichtig, dass der Bedienvorgang und die damit verbundene Informationsaufnahme nicht zu einer Ablenkung des Fahrers während der Fahrt führt. Der Bedienvorgang sollte daher so wenig Aufmerksamkeit vom Fahrer erfordern wie möglich und außerdem schnell durchführbar sein.

Um die Bedienung einer berührungsempfindlichen Oberfläche eines Touchscreens zu erleichtern, wurde in der DE 10 2006 037 154 A1 und der DE 10 2006 037 156 A1 vorgeschlagen, die Position eines Betätigungselements zu detektieren, bevor es die berührungsempfindliche Oberfläche berührt. Beispielsweise wird die Annäherung eines Fingers eines Nutzers als Bedienabsicht interpretiert. Falls eine solche Bedienabsicht festgestellt wird, kann die auf der Anzeigefläche dargestellte Information so verändert werden, dass der Touchscreen leichter bedient werden kann. Bei einer erfassten Bedienabsicht werden insbesondere Schaltflächen vergrößert dargestellt, so dass sie vom Nutzer leichter getroffen werden können. In der DE 10 2008 046 764 A1 ist eine Multifunktions-Bedieneinrichtung beschrieben, bei der durch eine optische Anzeigeeinheit optische Information ausgegeben wird, die einer Funktionsbelegung von darunter angeordneten Bedienfeldern zugeordnet ist. Die Bedienfelder sind auf einem Betätigungselement angeordnet und es wird erfasst, welches Bedienfeld von einer Annäherung oder Berührung durch einen Teil des Bedieners betroffen ist. Anschließend kann die Anzahl der Bedienfelder, ihre räumliche Ausdehnung und ihre Anordnung auf dem Betätigungselement variiert werden.

Manchmal möchte jedoch ein Nutzer häufig zwischen verschiedenen Menüs wechseln. Da jedoch in der Regel nur ein Menü angezeigt wird, ist eine intuitive und schnelle Menüführung dann häufig nicht gewährleistet, da der Nutzer zwischen den einzelnen Menüs hin- und herschalten muss.

Der vorliegenden Erfindung liegt die Aufgabe zugrunde, ein Verfahren und eine Bedienvorrichtung der eingangs genannten Art bereitzustellen, bei denen ein intuitive und einfache Menüführung in einem Fahrzeug durch den Nutzer gewährleistet ist.

Diese Aufgabe wird erfindungsgemäß durch ein Verfahren mit den Merkmalen des Anspruchs 1 und einer Bedienvorrichtung mit den Merkmalen des Anspruchs 7 gelöst. Vorteilhafte Aus- und Weiterbildungen ergeben sich aus den abhängigen Ansprüchen.

Bei dem erfindungsgemäßen Verfahren werden mehrere Menüs auf einer Anzeigefläche gleichzeitig angezeigt. Dabei ist vor der Anzeigefläche eine Detektionsbereich ausgebildet, der in mehrere Detektionszonen unterteilt ist, wobei jede Detektionszone einem Menü zugeordnet ist. Die Position eines Betätigungsobjekts wird in dem Detektionsbereich erfasst und einer Detektionszone zugeordnet. Dann wird das Menü, das der einen Detektionszone zugeordnet ist, in der das Betätigungsobjekt erfasst wurde, vergrößert dargestellt. Die Menüs, die den anderen Detektionszonen zugeordnet sind, werden verkleinert dargestellt. Das erfindungsgemäße Verfahren hat insbesondere den Vorteil, dass der Nutzer zu jeder Zeit einen Überblick über mehrere Menüs gleichzeitig erhält, ohne dabei ständig zwischen verschiedenen Anzeigen hin- und herschalten zu müssen. Gleichzeitig erleichtert die vergrößerte Darstellung des Menüs der einen Detektionszone die Bedienung dieses Menüs. Dies erhöht vorteilhafterweise die Sicherheit bei der Führung des Fahrzeugs, da die Bedienung der Menüs intuitiv und schnell geschieht.

Bei dem Betätigungsobjekt kann es sich um ein beliebiges Element handeln, mit welchem die Bedienoberfläche betätigt werden kann. Es handelt sich bei dem Betätigungsobjekt insbesondere um die Hand bzw. die Fingerspitze eines Nutzers. In dem Detektionsbereich wird insbesondere die Hand oder die Fingerspitze des Nutzers erfasst, bevor die Fingerspitze die Bedienoberfläche des Bedienelements berührt.

Durch die Anordnung der Detektionszonen kann bei dem erfindungsgemäßen Verfahren eine Position des Betätigungsobjekts erfasst werden. Die Anzahl der Detektionszonen entspricht dabei bevorzugt der Anzahl der Menüs. So ist jedem Menü genau eine Detektionszone zugeordnet. Dies ist vorteilhaft, um eine eindeutige Menüführung zu gewährleisten.

Die Detektionszonen grenzen insbesondere so aneinander, dass bei einer Bewegung des Betätigungsobjekts in einer Richtung, die parallel zu der Bedienoberfläche ist, das Betätigungsobjekt von einer Detektionszone unmittelbar in eine angrenzende Detektionszone wechselt. Das Betätigungselement wechselt insbesondere von einer Detektionszone unmittelbar in eine angrenzende Detektionszone, wenn es vor der Bedienfläche von einer Seite zur anderen Seite bewegt wird.

Der Detektionsbereich umfasst insbesondere ein Volumen vor der Bedienoberfläche. Die Detektionszonen erstrecken sich dann insbesondere senkrecht von der Bedienoberfläche weg. In diesem Fall findet kein Wechsel der Detektionszonen statt, wenn sich das Betätigungselement senkrecht zur Bedienoberfläche bewegt. Erst wenn die Bewegung eine Komponente parallel zu der Bedienoberfläche aufweist, findet ein Wechsel der Detektionszonen statt.

Gemäß einer Ausgestaltung des erfindungsgemäßen Verfahrens wird die gesamte Anzeigefläche von den Menüs eingenommen, so dass die Menüs, die einer anderen Detektionszone zugeordnet sind, in der das Betätigungsobjekt nicht erfasst wurde, entsprechend der Vergrößerung der einen Detektionszone verkleinert dargestellt werden. Vorteilhafterweise bleibt so der Überblick über mehrere Menüs erhalten. Der Nutzer muss nicht zwischen verschiedenen Anzeigen hin- und herschalten.

Insbesondere werden drei Menüs gleichzeitig angezeigt. Im Allgemeinen ist die Anzahl der angezeigten Menüs beliebig. Die Anzahl der angezeigten Menüs sollte jedoch nicht so hoch liegen, dass die Anzeige auf der Anzeigefläche unübersichtlich wird. Bevorzugt liegt die Anzahl der gleichzeitig angezeigten Menüs zwischen zwei und fünf.

Gemäß einer weiteren Ausgestaltung erstrecken sich die Menüs horizontal über die Breite der Anzeigefläche, so dass der Detektionsbereich in mehrere horizontale Detektionszonen unterteilt wird. Alternativ können die Menüs sich auch vertikal über die Höhe der Anzeigefläche erstrecken. Dann wird der Detektionsbereich in mehrere vertikale Detektionszonen unterteilt.

Der Nutzer kann sich die bevorzugte Bewegungsrichtung des Betätigungsobjekts vorteilhafterweise dann aussuchen.

Gemäß einer weiteren Ausgestaltung wird bestimmt, welche Menüs am häufigsten von einem Nutzer genutzt werden. Diese Menüs werden dann zur gleichzeitigen Anzeige ausgewählt. Dies ist eine besonders nutzerfreundliche Ausgestaltung der Erfindung. Der Nutzer findet von Beginn an die von ihm am häufigsten verwendeten Menüs auf der Anzeigefläche vor. Alternativ können die angezeigten Menüs auch auf andere Art und Weise ausgewählt werden. Sie können beispielsweise über Menülisten, Menügitter, Menütasten, Menükarusselle oder Menübänder vom Nutzer ausgewählt werden. Die Menüs können aber auch über Sprachbedienung ausgewählt werden.

Die erfindungsgemäße Bedienvorrichtung in einem Fahrzeug umfasst ein Bedienelement, das eine Bedienoberfläche aufweist. Weiterhin umfasst die Bedienvorrichtung eine Anzeigevorrichtung mit einer Anzeigefläche, auf der mehrere Menüs gleichzeitig anzeigbar sind, sowie eine Annäherungserfassungsvorrichtung. Mit der Annäherungserfassungsvorrichtung ist ein Betätigungsobjekt in einem Detektionsbereich erfassbar, wobei der Detektionsbereich in mehrere Detektionszonen unterteilt ist und jede Detektionszone einem Menü zugeordnet ist. Ferner umfasst die Bedienvorrichtung eine Steuervorrichtung, die die Anzeigefläche derart ansteuert, dass das Menü, das der einen Detektionszone zugeordnet ist, in der das Betätigungsobjekt erfasst wurde, vergrößert dargestellt wird. Die Menüs, die den anderen Detektionszonen zugeordnet sind, werden verkleinert dargestellt. Die Bedienvorrichtung ist insbesondere dazu ausgebildet, das erfindungsgemäße Verfahren durchzuführen und weist daher alle Vorteile des Verfahrens auf.

Bevorzugt ist die Bedienoberfläche berührungsempfindlich ausgebildet und auf der Anzeigefläche angeordnet.

Die Erfindung betrifft ferner ein Fahrzeug mit einer solchen Bedienvorrichtung.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung,
- Figur 2: zeigt eine Schnittansicht der Anzeigevorrichtung des Ausführungsbeispiels der erfindungsgemäßen Bedienvorrichtung,
- Figur 3: zeigt die Geometrie des Detektionsbereichs in einer perspektivischen Ansicht,
- Figur 4a: zeigt die Geometrie des Detektionsbereichs und die Ansicht auf die Anzeigefläche in einer Frontansicht und
- die Figuren 4b bis 4d: zeigen ein Ausführungsbeispiel der Anzeige auf einer Anzeigefläche mit einem in den verschiedenen Detektionszonen erfassten Betätigungsobjekt.

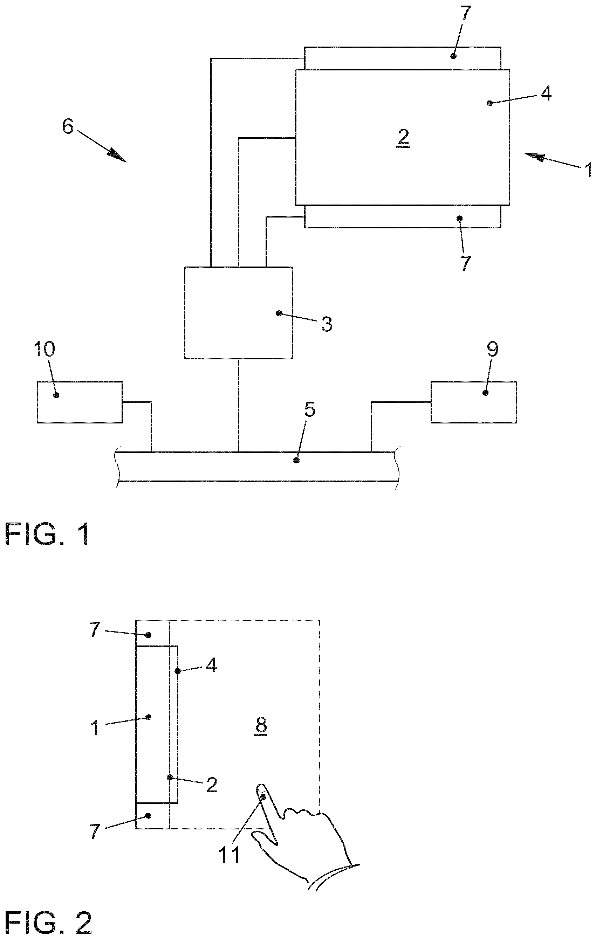

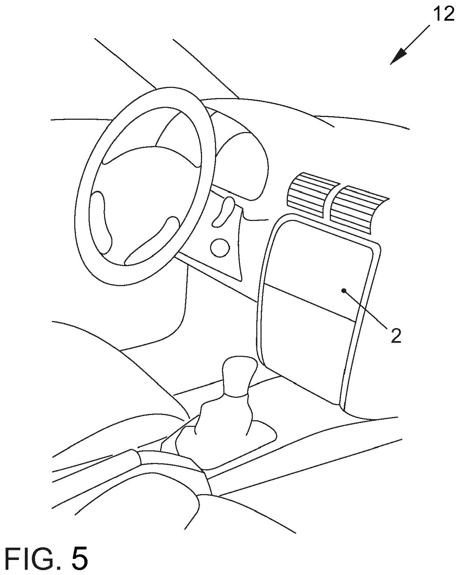

Mit Bezug zu den Figuren 1, 2 und 5 wird zunächst ein Ausführungsbeispiel der erfindungsgemäßen Bedienvorrichtung 6 und dessen Anordnung in einem Fahrzeug 12 erläutert:
Die Bedienvorrichtung 6 umfasst ein Bedienelement mit einer Bedienoberfläche 4. Im hier beschriebenen Ausführungsbeispiel ist die Bedienoberfläche 4 berührungsempfindlich ausgebildet und auf der Anzeigefläche 2 einer Anzeigevorrichtung 1 angeordnet. Es wird somit ein so genannter Touchscreen bereitgestellt. Die Anzeigefläche 2 mit der berührungsempfindlichen Bedienoberfläche 4 ist zentral im vorderen Bereich des Fahrzeugs 12 zwischen dem Fahrersitz und dem Beifahrersitz angeordnet, so dass die Anzeigefläche 2 gut sowohl vom Fahrer als auch vom Beifahrer betrachtet und mit der Fingerspitze 11 erreicht werden kann. Die Bedienoberfläche 4 kann somit mit einem Betätigungsobjekt 11 von dem Fahrer bzw. dem Beifahrer betätigt werden. Mit dem Betätigungsobjekt 11 kann die als Touchscreen ausgebildete Bedienoberfläche 4 des Bedienelements betätigt werden.

Die Bedienvorrichtung 6 umfasst ferner eine Steuervorrichtung 3. Die Steuervorrichtung 3 ist mit der Anzeigevorrichtung 1 verbunden, mit welcher mehrere Menüs A, B und C zur Menüführung auf der Anzeigefläche 2 erzeugbar sind.

Des Weiteren umfasst die Bedienvorrichtung 6 eine Annäherungserfassungseinrichtung 7. Mittels der Annäherungserfassungseinrichtung 7 kann ein Betätigungsobjekt 11 in einem Detektionsbereich 8 erfasst werden. Der Detektionsbereich 8 ist in Fig. 2 im Detail dargestellt. Der Detektionsbereich 8 ist so ausgebildet, dass eine Annäherung eines Betätigungsobjekts 11 an die berührungsempfindliche Oberfläche 4 von der Annäherungserfassungsvorrichtung 7 auf der Anzeigefläche 2 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 11 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

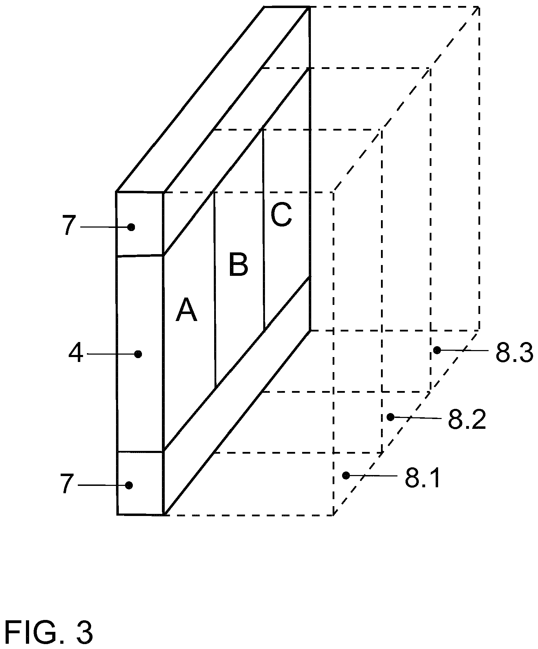

In dem hier beschriebenen Ausführungsbeispiel sollen drei Menüs A, B, C auf der Anzeigefläche 2 angezeigt werden. Die Unterteilung des Detektionsbereichs 8 in Detektionszonen 8.1 bis 8.3 ist im Detail in Fig. 3 gezeigt. Jede Detektionszone 8.1 bis 8.3 bildet wiederum einen Quader. Die Ober- und Unterseite des Quaders für eine Detektionszone 8.1 bis 8.3 fällt mit der Ober- und Unterseite des Quaders des Detektionsbereichs 8 zusammen. Gleichermaßen bilden die Flächen, die der Bedienoberfläche 4 zu- bzw. abgewandt sind, die entsprechenden Flächen des Quaders für den Detektionsbereich 8. Der Quader des Detektionsbereichs 8 ist somit von den Quadern der Detektionszonen 8.1 bis 8.3 vertikal unterteilt. Die Detektionszonen 8.1 bis 8.3 erstrecken sich senkrecht von der Bedienoberfläche 4 weg. Jede Detektionszone ist einem auf der Anzeigefläche angezeigten Menü zugeordnet. Detektionszone 8.1 ist dem Menü A, Detektionszone 8.2 dem Menü B und Detektionszone 8.3 dem Menü C zugeordnet. Die Anzahl der Detektionszonen richtet sich nach der Anzahl der Menüs. Sind also vier oder fünf Menüs angezeigt, wird der Detektionsbereich 8 in vier bzw. fünf Detektionszonen unterteilt. Dies ermöglicht eine eindeutige Zuordnung der Detektionszonen zu den Menüs.

Die Annäherungserfassungseinrichtung 7 überträgt die aktuelle Position eines Betätigungsobjekts 11 im Detektionsbereich 8 fortwährend an die Steuervorrichtung 3. In Abhängigkeit von diesem Signal kann die Steuervorrichtung 3 die Position des Betätigungsobjekts 11 einer Detektionszone 8.1 bis 8.3 zuordnen und die Anzeige auf der Anzeigefläche 2 verändern.

Schließlich ist die Steuervorrichtung 3 mit einem Datenbus 5 gekoppelt. Über diesen Datenbus 5 ist die Steuervorrichtung 3 mit weiteren Einrichtungen 9, 10 des Fahrzeugs 12 verbunden, zu denen Informationen auf der Anzeigefläche 2 angezeigt werden sollen und die mittels der Bedienvorrichtung 6 bedient werden sollen. Mittels Bedienvorrichtung 6 und durch das Verfahren können den Fahrzeuginsassen Informationen angezeigt werden. Ferner können die Fahrzeuginsassen mittels der Bedienvorrichtung 6 Einrichtungen 9, 10 des Fahrzeugs 12 bedienen und die Anzeige steuern.

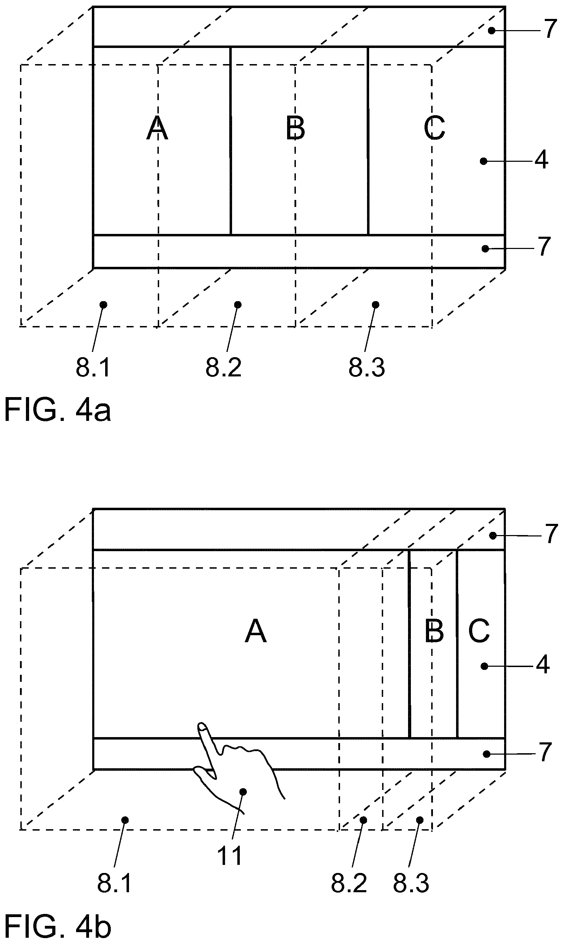

Im Folgenden wird ein Ausführungsbeispiel des erfindungsgemäßen Verfahrens, welches von der vorstehend beschriebenen Bedienvorrichtung 6 ausführbar ist, mit Bezug zu den Figuren 4a bis 4d im Detail erläutert:
Figur 4a zeigt die Anzeige auf der Anzeigefläche 2, auf der drei Menüs A, B, C horizontal nebeneinander angezeigt werden in Frontansicht, wenn kein Betätigungsobjekt von der Annäherungserfassungsvorrichtung 7 erfasst worden ist. Die Menüs A, B, C nehmen die gesamte Anzeigefläche 2 ein und erstrecken sich jeweils über die Höhe der Anzeigefläche 2.

Die angezeigten Menüs A, B und C lassen sich auf unterschiedliche Weise auswählen. Die angezeigten Menüs A, B und C können beispielsweise aus einer Menüliste, einem Menügitter, einem Menükarussell oder einem Menüband ausgewählt werden. Alternativ können die Menüs auch mittels Sprachbedienung ausgewählt werden. Bevorzugt werden allerdings immer die Menüs angezeigt, die vom Nutzer am häufigsten genutzt werden.

Die Menüs werden gleich groß angezeigt. Eine Übersicht über den Inhalt der Menüs in dieser Ansicht ist zwar möglich, eine Betätigung ist jedoch aufgrund der eingeschränkten Größe eines jeden Menüs nur erschwert möglich. Derartige Schwierigkeiten bei der Bedienung sollen bei der erfindungsgemäßen Bedienvorrichtung bzw. dem erfindungsgemäßen Verfahren vermieden werden.

In einem ersten Schritt wird jedem Menü A, B und C eine Detektionszone 8.1, 8.2 und 8.3 zugeordnet. Genauer wird dem Menü A die Detektionszone 8.1, dem Menü B die Detektionszone 8.2 und dem Menü C die Detektionszone 8.3 zugeordnet.

In einem zweiten Schritt wird die Annäherung eines Betätigungsobjekts 11, im konkreten Ausführungsbeispiel eine Fingerspitze 11 des Fahrers oder Beifahrers, an die Bedienoberfläche 4 von der Annäherungserfassungsvorrichtung 7 erfasst. Wird, wie in Figur 4b gezeigt, die Fingerspitze 11 in der Detektionszone 8.1, die dem Menü A zugeordnet ist, erfasst, so steuert die Steuervorrichtung 3 die Anzeigevorrichtung 1 derart an, dass das Menü A auf der Anzeigefläche 2 vergrößert dargestellt wird. Gleichzeitig werden Menü B und C in Richtung des rechten Rands der Anzeigefläche 2 verschoben und entsprechend verkleinert dargestellt. Um zu vermeiden, dass bei einer Bedienung des Menüs A, die Menüs B und C vergrößert werden, verkleinern sich die Detektionszonen 8.2 und 8.3 in gleichem Maße wie die ihnen zugeordneten Menüs B und C. Insbesondere sind zu jeder Zeit alle drei Menüs A, B und C auf der Anzeigefläche 2 sichtbar. Bevorzugt nehmen die drei Menüs A, B und C die gesamte Anzeigefläche 2 ein.

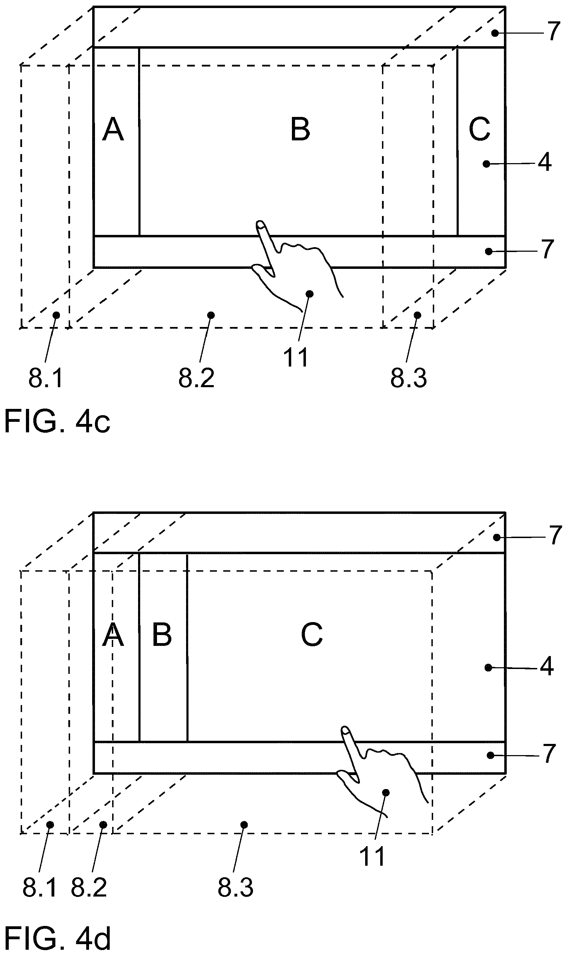

Für eine Bedienung des Menüs B bringt der Nutzer seine Fingerspitze 11 vor das Menü B, also in die Detektionszone 8.2. Die Fingerspitze 11 wird von der Annäherungserfassungsvorrichtung 7 in der Detektionszone 8.2 erfasst. Die Steuervorrichtung 3 steuert also die Anzeigevorrichtung 1 derart an, dass das Menü B, das sich mittig zwischen Menü A und Menü C befindet, vergrößert dargestellt wird. Menü A wird gleichzeitig an den linken Rand der Anzeigefläche 2 und Menü C an den rechten Rand der Anzeigefläche 2 verschoben und dort verkleinert dargestellt. Die Detektionszone 8.1 und 8.3 verkleinern sich in gleichem Maße wie sich die Menüs A bzw. C verkleinern. Dies ist in Figur 4c gezeigt.

Für eine Bedienung des Menüs C wird die Fingerspitze 11 in der Detektionszone 8.3 von der Annäherungserfassungsvorrichtung 7 erfasst. Die Steuervorrichtung 3 steuert also die Anzeigevorrichtung 1 derart an, dass das Menü C vergrößert auf der Anzeigefläche 2 angezeigt wird, während die Menüs A und B in Richtung des linken Rands der Anzeigefläche 2 verschoben werden und dort verkleinert dargestellt werden. Die Detektionszonen 8.1 und 8.2 verkleinern sich in gleichem Maße wie sich die Menüs A bzw. B verkleinern. Dies ist in Figur 4d gezeigt.

Alternativ zur horizontalen Anordnung der Menüs A, B und C können die Menüs A, B und C auch vertikal untereinander angeordnet sein. Die Detektionszonen 8.1, 8.2 und 8.3 sind dann entsprechend als Quader vor den Menüs ausgebildet. Wird dann die Fingerspitze 11 in Detektionszone 8.1 erfasst, wird Menü A vergrößert dargestellt, während die Menüs B und C am unteren Rand der Anzeigefläche 2 dargestellt werden. Bei einer vergrößerten Darstellung des Menüs B wird das Menü am oberen Rand und das Menü C am unteren Rand der Anzeigefläche 2 verkleinert dargestellt. Ebenso werden bei einer vergrößerten Darstellung des Menüs C die Menüs A und B verkleinert am oberen Rand der Anzeigefläche 2 dargestellt.

Die Menüs können natürlich auch in mehreren Reihen und Spalten angeordnet werden. Dies entspricht also einer Kombination der horizontalen und vertikalen Anordnung der Menüs.

### BEZUGSZEICHENLISTE

- 1: Anzeigevorrichtung
- 2: Anzeigefläche
- 3: Steuervorrichtung
- 4: Bedienoberfläche
- 5: Datenbus
- 6: Bedienvorrichtung
- 7: Annäherungserfassungsvorrichtung
- 8: Detektionsbereich
- 8.1-8.3: Detektionszonen
- 9: Einrichtung des Fahrzeugs
- 10: Einrichtung des Fahrzeugs
- 11: Betätigungsobjekt, Fingerspitze
- 12: Fahrzeug

## Patentansprüche

1. Verfahren zum Betreiben einer Bedienvorrichtung (6) in einem Fahrzeug (12), wobei die Bedienvorrichtung (6) ein Bedienelement mit einer Bedienoberfläche (4) und eine Anzeigevorrichtung (1) mit einer Anzeigefläche (2) umfasst, wobei bei dem Verfahren
- mehrere Menüs (A, B, C) auf einer Anzeigefläche (2) gleichzeitig angezeigt werden,
- ein Detektionsbereich (8) gebildet wird, der ein Volumen vor der Bedienoberfläche (4) umfasst und in mehrere Detektionszonen (8.1, 8.2, 8.3) unterteilt ist, wobei jede Detektionszone (8.1, 8.2, 8.3) einem Menü (A, B, C) zugeordnet wird,
- die Position eines Betätigungsobjekts (11) in dem Detektionsbereich (8) erfasst und einer Detektionszone (8.1, 8.2, 8.3) zugeordnet wird und
- das Menü (A, B, C), das der einen Detektionszone (8.1, 8.2, 8.3) zugeordnet ist, in der das Betätigungsobjekt (11) erfasst wurde, vergrößert dargestellt wird und die Menüs (A, B, C), die den anderen Detektionszonen (8.1, 8.2, 8.3) zugeordnet sind, verkleinert dargestellt werden,
**dadurch gekennzeichnet, dass**
- die Bedienoberfläche (4) berührungsempfindlich ausgebildet ist und auf der Anzeigefläche (2) angeordnet ist,
- bei der Erfassung des Betätigungsobjekts (11) im Detektionsbereich (8) eine Annäherung des Betätigungsobjekts (11) an die berührungsempfindliche Bedienoberfläche (4) erfasst wird und
- sich die anderen Detektionszonen (8.1, 8.2, 8.3) in gleichem Maße verkleinern wie die ihnen zugeordneten Menüs (A, B, C).

2. Verfahren nach Anspruch 1,
**dadurch gekennzeichnet, dass**
die gesamte Anzeigefläche (2) von den Menüs (A, B, C) eingenommen wird, so dass die Menüs (A, B, C), die einer anderen Detektionszone (8.1, 8.2, 8.3) zugeordnet sind, in der das Betätigungsobjekt (11) nicht erfasst wurde, entsprechend der Vergrößerung der einen Detektionszone verkleinert dargestellt werden.

3. Verfahren nach einem der Ansprüche 1 bis 2,
**dadurch gekennzeichnet, dass**
drei Menüs (A, B, C) gleichzeitig angezeigt werden.

4. Verfahren nach einem der vorhergehenden Ansprüche,
**dadurch gekennzeichnet, dass**
sich die Menüs (A, B, C) horizontal über die Breite der Anzeigefläche (2) erstrecken, so dass der Detektionsbereich (8) in mehrere horizontale Detektionszonen (8.1, 8.2, 8.3) unterteilt wird.

5. Verfahren nach einem der Ansprüche 1 bis 3,
**dadurch gekennzeichnet, dass**
sich die Menüs (A, B, C) vertikal über die Höhe der Anzeigefläche (2) erstrecken, so dass der Detektionsbereich (8) in mehrere vertikale Detektionszonen (8.1, 8.2, 8.3) unterteilt wird.

6. Verfahren nach einem der vorhergehenden Ansprüche,
**dadurch gekennzeichnet, dass**
- bestimmt wird, welche Menüs (A, B, C) am häufigsten genutzt werden und
- diese Menüs (A, B, C) zur gleichzeitigen Anzeige ausgewählt werden.

7. Bedienvorrichtung (6) für ein Fahrzeug (12) mit
- einem Bedienelement, das eine Bedienoberfläche (4) aufweist,
- einer Anzeigevorrichtung (1) mit einer Anzeigefläche (2), auf der mehrere Menüs (A, B, C) gleichzeitig anzeigbar sind, wobei
- die Bedienoberfläche (4) berührungsempfindlich ausgebildet ist und auf der Anzeigefläche (2) angeordnet ist,
- einer Annäherungserfassungsvorrichtung (7), mit der ein Betätigungsobjekt (11) in einem Detektionsbereich (8), der ein Volumen vor der Bedienoberfläche (4) umfasst, erfassbar ist, wobei eine Annäherung des Betätigungsobjekts (11) an die berührungsempfindliche Bedienoberfläche (4) erfassbar ist, wobei der Detektionsbereich (8) in mehrere Detektionszonen (8.1, 8.2, 8.3) unterteilt ist und jede Detektionszone (8.1, 8.2, 8.3) einem Menü (A, B, C) zugeordnet ist, und
- einer Steuervorrichtung (3), welche konfiguriert ist, die Anzeigefläche (2) derart anzusteuern, dass das Menü (A, B, C), das der einen Detektionszone (8.1, 8.2, 8.3) zugeordnet ist, in der das Betätigungsobjekt (11) erfasst wurde, vergrößert dargestellt wird und die Menüs (A, B, C), die den anderen Detektionszonen (8.1, 8.2, 8.3) zugeordnet sind, verkleinert dargestellt werden,
**dadurch gekennzeichnet, dass**
die Steuervorrichtung (3) konfiguriert ist, die Anzeigefläche (2) derart anzusteuern, dass sich die anderen Detektionszonen (8.1, 8.2, 8.3) in gleichem Maße verkleinern wie die ihnen zugeordneten Menüs (A, B, C).

8. Fahrzeug (12) mit einer Bedienvorrichtung (6) nach Anspruch 7.

## Claims

1. Method for operating an operating device (6) in a vehicle (12), the operating device (6) comprising an operating element having a user interface (4) and a display device (1) having a display surface (2), in which case, in the method,
- a plurality of menus (A, B, C) are displayed at the same time on a display surface (2),
- a detection region (8) is formed which comprises a volume in front of the user interface (4) and is divided into a plurality of detection zones (8.1, 8.2, 8.3), each detection zone (8.1, 8.2, 8.3) being assigned to a menu (A, B, C),
- the position of an actuation object (11) is detected in the detection region (8) and is assigned to a detection zone (8.1, 8.2, 8.3), and
- the menu (A, B, C) which is assigned to the one detection zone (8.1, 8.2, 8.3) in which the actuation object (11) has been detected is displayed on an enlarged scale, and the menus (A, B, C) which are assigned to the other detection zones (8.1, 8.2, 8.3) are displayed on a reduced scale,
**characterized in that**
- the user interface (4) is touch-sensitive and is arranged on the display surface (2),
- when the actuation object (11) is detected in the detection region (8), the situation in which the actuation object (11) approaches the touch-sensitive user interface (4) is detected, and
- the other detection zones (8.1, 8.2, 8.3) are reduced to the same extent as the menus (A, B, C) assigned to them.

2. Method according to Claim 1, **characterized in that** the entire display surface (2) is occupied by the menus (A, B, C), with the result that the menus (A, B, C) which are assigned to another detection zone (8.1, 8.2, 8.3) in which the actuation object (11) has not been detected are displayed on a reduced scale according to the enlargement of the one detection zone.

3. Method according to either one of Claims 1 and 2, **characterized in that** three menus (A, B, C) are displayed at the same time.

4. Method according to one of the preceding claims, **characterized in that** the menus (A, B, C) extend horizontally over the width of the display surface (2), with the result that the detection region (8) is divided into a plurality of horizontal detection zones (8.1, 8.2, 8.3).

5. Method according to one of Claims 1 to 3, **characterized in that** the menus (A, B, C) extend vertically over the height of the display surface (2), with the result that the detection region (8) is divided into a plurality of vertical detection zones (8.1, 8.2, 8.3).

6. Method according to one of the preceding claims, **characterized in that**
- it is determined which menus (A, B, C) are used most frequently, and
- these menus (A, B, C) are selected for display at the same time.

7. Operating device (6) for a vehicle (12), having
- an operating element which has a user interface (4),
- a display device (1) having a display surface (2) on which a plurality of menus (A, B, C) can be displayed at the same time, wherein
- the user interface (4) is touch-sensitive and is arranged on the display surface (2),
- an approach detection device (7) which can be used to detect an actuation object (11) in a detection region (8) which comprises a volume in front of the user interface (4), the situation in which the actuation object (11) approaches the touch-sensitive user interface (4) being able to be detected, the detection region (8) being divided into a plurality of detection zones (8.1, 8.2, 8.3) and each detection zone (8.1, 8.2, 8.3) being assigned to a menu (A, B, C), and
- a control device (3) which is configured to control the display surface (2) in such a manner that the menu (A, B, C) which is assigned to the one detection zone (8.1, 8.2, 8.3) in which the actuation object (11) has been detected is displayed on an enlarged scale, and the menus (A, B, C) which are assigned to the other detection zones (8.1, 8.2, 8.3) are displayed on a reduced scale,
**characterized in that**
the control device (3) is configured to control the display surface (2) in such a manner that
- the other detection zones (8.1, 8.2, 8.3) are reproduced to the same extent as the menus (A, B, C) assigned to them.

8. Vehicle (12) having an operating device (6) according to Claim 7.

## Revendications

1. Procédé pour faire fonctionner un dispositif de commande (6) installé dans un véhicule (12), dans lequel le dispositif de commande (6) comprend un élément de commande avec une surface de commande (4) et un dispositif d'affichage (1) avec une face d'affichage (2), dans lequel dans le procédé
- on affiche simultanément plusieurs menus (A, B, C) sur une face d'affichage (2),
- on forme une région de détection (8), qui comprend un volume devant la surface de commande (4) et qui est divisée en plusieurs zones de détection (8.1, 8.2, 8.3), dans lequel chaque zone de détection (8.1, 8.2, 8.3) est associée à un menu (A, B, C),
- on détecte la position d'un objet d'actionnement (11) dans la région de détection (8) et on l'associe à une zone de détection (8.1, 8.2, 8.3), et
- on représente en agrandissement le menu (A, B, C), qui est associé à la zone de détection (8.1, 8.2, 8.3) dans laquelle l'objet d'actionnement (11) a été détecté, et on représente en réduction les menus (A, B, C) associés aux autres zones de détection (8.1, 8.2, 8.3),
**caractérisé en ce que**
- la surface de commande (4) est réalisée sous forme tactile et est disposée sur la face d'affichage (2),
- lors de la détection de l'objet d'actionnement (11) dans la région de détection (8), on détecte une approche de l'objet d'actionnement (11) vers la surface de commande tactile (4), et
- les autres zones de détection (8.1, 8.2, 8.3) se réduisent dans la même mesure que les menus (A, B, C) qui leur sont associés.

2. Procédé selon la revendication 1, **caractérisé en ce que** toute la face d'affichage (2) est occupée par les menus (A, B, C), de telle manière que les menus (A, B, C), qui sont associés à une autre zone de détection (8.1, 8.2, 8.3), dans laquelle l'objet d'actionnement (11) n'a pas été détecté, soient représentés en réduction en correspondance avec l'agrandissement de ladite zone de détection.

3. Procédé selon une des revendications 1 à 2, **caractérisé en ce que** l'on affiche simultanément trois menus (A, B, C).

4. Procédé selon l'une quelconque des revendications précédentes, **caractérisé en ce que** les menus (A, B, C) s'étendent horizontalement sur la largeur de la face d'affichage (2), de telle manière que la région de détection (8) soit divisée en plusieurs zones de détection horizontales (8.1, 8.2, 8.3).

5. Procédé selon l'une quelconque des revendications 1 à 3, **caractérisé en ce que** les menus (A, B, C) s'étendent verticalement sur la hauteur de la face d'affichage (2), de telle manière que la région de détection (8) soit divisée en plusieurs zones de détection verticales (8.1, 8.2, 8.3).

6. Procédé selon l'une quelconque des revendications précédentes, **caractérisé en ce que**
- on détermine quels menus (A, B, C) sont utilisés le plus fréquemment, et
- on sélectionne ces menus (A, B, C) pour l'affichage simultané.

7. Dispositif de commande (6) destiné à un véhicule (12), avec
- un élément de commande, qui présente une surface de commande (4),
- un dispositif d'affichage (1) avec une face d'affichage (2), sur laquelle plusieurs menus (A, B, C) peuvent être affichés simultanément, dans lequel
- la surface de commande (4) est réalisée sous forme tactile et est disposée sur la face d'affichage (2),
- un dispositif de détection d'approche (7), avec lequel un objet d'actionnement (11) peut être détecté dans une région de détection (8), qui comprend un volume devant la surface de commande (4), dans lequel une approche de l'objet d'actionnement (11) vers la surface de commande tactile (4) peut être détectée, dans lequel la région de détection (8) est divisée en plusieurs zones de détection (8.1, 8.2, 8.3) et chaque zone de détection (8.1, 8.2, 8.3) est associée à un menu (A, B, C), et
- un dispositif de commande (3), qui est configuré pour commander la face d'affichage (2) de telle manière que le menu (A, B, C), qui est associé à la zone de détection (8.1, 8.2, 8.3) dans laquelle l'objet d'actionnement (11) a été détecté, soit représenté en agrandissement et que les menus (A, B, C) qui sont associés aux autres zones de détection (8.1, 8.2, 8.3), soient représentés en réduction,
**caractérisé en ce que** le dispositif de commande (3) est configuré pour commander la face d'affichage (2) de telle manière que les autres zones de détection (8.1, 8.2, 8.3) se réduisent dans la même mesure que les menus (A, B, C) qui leur sont associés.

8. Véhicule (12) avec un dispositif de commande (6) selon la revendication 7.
